# EUROPEAN PATENT APPLICATION

(11) **EP 2 974 780 A1**
(43) Date of publication of application: **20.01.2016**
(21) Application number: 15176155.8
(22) Date of filing: 09.07.2015
(51) Int. Cl.: B01D 53/14

(54) **ENERGY RECOVERY FOR WASTE GAS CAPTURE SYSTEMS**

(30) Priority: 10.07.2014 US 201414327737
(71) Applicant: The Babcock & Wilcox Company, Barberton, OH 44203-0351 (US)
(72) Inventor: SLAVENS, John R, Hudson, OH Ohio 44236-3838 (US); GAYHEART, Jeb W, Streetsboro, OH Ohio 44241 (US)
(74) Representative: D Young & Co LLP

(57) **Abstract**

Processes and units are described for recovering energy from a waste gas capture system. Heat energy generated from the compression of waste gas can be integrated with a waste gas capture system to reduce energy needs of the system. Recovered heat energy is used to produce useful energy sources such as low pressure steam that can be integrated back into the waste gas capture system. The recovered heat energy can be used to produce the waste gas, for instance in a regeneration column and reboiler. The produced waste gas can be fed into the compression units designed to transform the waste gas into a storage fluid.

## Description

### FIELD AND BACKGROUND

The present disclosure relates to energy-recovery processes and units for use with a waste gas capture system, and more particularly, integrating heat recovered from compression of waste gas with a waste gas capture system to reduce energy needs of the system.

Waste gas, such as CO₂ or H₂S, is produced in gas processing or energy production plants. For example, CO₂ is contained in the flue gas formed during the combustion of waste materials, biomass, coal and other fossil or carbon based fuels/materials being burned by electric power generating plants, waste-to-energy plants or other industrial processes designed to produce power or process steam. Waste gas can be captured with the use of absorption solvents in conventional equipment. The solvents are preferably regenerable such that the dissolved waste gas can be released from the solvent for re-use of the solvent. The solvent regeneration process can include a regenerator such as a stripping tower and a heat source such as a reboiler to add energy to release waste gas from the solvent, such as an amine-based solvent. To release the waste gas from the solvent, significant amounts of heat energy in the form of steam are used to fuel the reboilers and related equipment.

Waste gas released from the solvents can be processed with single or multistage compressors to compress the waste gas into a pressurized gas or liquid product stream suitable for storage. Downstream of the one or more compression stages, the waste gas can be cooled to remove trace amounts of water vapor or to enhance the performance and efficiency of subsequent compression stages. Heat exchangers employing conventional heat transfer fluids can be used to reduce the waste gas temperature and volume. Recovery of heat energy from compression can be desirable. Integration of the heat energy generated from the compression of waste gas with the waste gas capture system can reduce regeneration energy needs for releasing waste gas from stripping solvents thus improving overall plant efficiency and sending more power to the grid. Accordingly, there remains a need for processes and units effective at recovering and integrating compression heat energy back into waste gas capture systems.

### SUMMARY

Particular aspects and embodiments are set out in the appended claims.

Provided herein is an energy-recovery process for a waste gas capture system, wherein the waste gas can include CO₂ or H₂S. The process includes releasing waste gas from an absorption solvent and feeding the waste gas to a waste gas compressor(s). The process can further include introducing a heat transfer fluid to a heat exchanger downstream of a waste gas compressor to reduce the temperature of the waste gas compressor discharge, wherein the temperature of the heat transfer fluid is increased. The heat transfer fluid exiting the heat exchanger can be used for generating a first energy source such as a first steam source. The first steam source can be mixed with a second steam source to form a mixed steam source. The mixed steam source can be supplied to the waste gas capture system to provide a recovered energy source.

In one embodiment, the mixed steam source can be used as all or part of a heat source for producing waste gas in a waste gas regenerator, such as a regeneration column. The produced waste gas can be fed to the waste gas compressor.

In one embodiment, the mixed steam source can be used as all or part of a heat source for a regenerating column in a waste gas capture system. The mixed steam source can be used to increase the temperature of a reflux stream of the regenerating column.

In one embodiment, the waste gas capture system can have a waste gas absorption solvent. The mixed steam source can be used to heat the waste gas absorption solvent prior to the waste gas absorption solvent being introduced to a waste gas stream.

In another embodiment, the heat transfer fluid of the energy-recovery process can be configured in a closed-loop heat exchange system for recovering heat generated from compression of waste gas and returning that heat to a waste gas capture system.

In an embodiment, a reboiler can be used for releasing the waste gas from the absorption solvent and the mixed steam source can be used as a heat source for producing the waste gas in a regeneration column.

In another embodiment, a thermal reclaimer can be used for regenerating the waste gas, solvent, or other volatiles, wherein the mixed steam source provides the energy to the thermal reclaimer to release the volatiles.

In an embodiment, the mixed steam source can be generated with a steam ejector. The steam ejector can use the second steam source to draw or extract the first steam source. The second steam source is preferably at a higher pressure than the first steam source.

In another embodiment, the mixed steam source can be generated with a compressor.

In another embodiment, the energy-recovery process can include the use of a second waste gas compressor. The reduced-temperature compressor discharge exiting the heat exchanger can be introduced to the second waste gas compressor and the temperature of the discharge from the second waste gas compressor can be reduced by the use of a second heat exchanger located downstream. A second heat transfer fluid can be used in the second heat exchanger wherein the second heat transfer fluid exiting the second heat exchanger can be used to generate the first steam source.

Provided herein is an energy-recovery unit for a waste gas capture system. The waste gas can be any gas, for example, CO₂ or H₂S. The unit can include a heat exchange loop containing a heat transfer fluid. A heat exchanger can be located downstream of a waste gas compressor such that the heat exchanger receives the waste gas compressor discharge and the heat transfer fluid flows through the heat exchanger to reduce the temperature of the compressed waste gas being discharged from the compressor. A steam generating apparatus, such as a vessel for housing water, can be used to produce a first steam source. The steam generating apparatus can have a heat exchange component for producing steam wherein the heat exchange component is in fluid communication with the heat transfer fluid exiting the heat exchanger. The heat transfer fluid can integrate heat recovered from cooling the waste gas compressor discharge to the steam generating apparatus for producing steam that can be reintroduced into one or more points of the waste gas capture system. A steam mixing device for combing the first steam source and a second steam source can be used to form a mixed steam source for use with the waste gas capture system to provide a recovered energy source.

In one embodiment, the unit can further include a steam ejector for producing the mixed steam source. The steam ejector can use the second steam source to draw or extract the first steam source. The second steam source is preferably at a higher pressure than the first steam source.

In another embodiment, the unit can include a compressor for producing the mixed steam source.

In one embodiment, the steam generating apparatus can be a vessel and the heat exchange component can be a heat coil in the vessel. The heat coil can house the heat transfer fluid exiting the heat exchanger such that recovered heat from the waste gas compressor discharge is transferred to water in the vessel to produce a first steam source. The water in the vessel can be steam condensate that is discharged from the waste gas capture system, for example, from a reboiler used to evaporate waste gas from a solvent.

In another embodiment, the steam condensate being supplied to the steam generating apparatus can include condensate generated from use of the mixed steam source being used in the waste gas capture system.

In one embodiment, the waste gas being fed to the waste gas compressor is produced by a waste gas regenerator used in the capture system. Further, the mixed steam source formed in the unit is supplied to the waste gas regenerator for producing the waste gas being compressed.

These and other non-limiting aspects and/or objects of the disclosure are more particularly described below.

### BRIEF DESCRIPTION OF THE DRAWINGS

The present teachings may be implemented or embodied in in various components and arrangements of components, and in various process operations and arrangements of process operations. The drawings are only for purposes of illustrating preferred embodiments and are not to be construed as limiting the invention. This disclosure includes the following drawings.
FIG. 1 shows an energy-recovery diagram for a waste gas capture system. As shown, a single stage compression is used to process waste gas produced from a waste gas capture system.
FIG. 2 shows an energy-recovery diagram for a waste gas capture system. A multi-stage compression is used to process waste gas produced from a waste gas capture system.

### DETAILED DESCRIPTION

A more complete understanding of the processes and apparatuses disclosed herein can be obtained by reference to the accompanying drawings. These figures are merely schematic representations based on convenience and the ease of demonstrating the existing art and/or the present development, and are, therefore, not intended to indicate relative size and dimensions of the assemblies or components thereof.

Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

The singular forms "a," "an," and "the" include plural referents unless the context clearly dictates otherwise.

To the extent that explanations of certain terminology or principles of energy-recovery processes and units for use with a waste gas capture system, and related arts may be necessary to understand the present disclosure, the reader is referred to Steam/its generation and use, 40th Edition, Stultz and Kitto, Eds., Copyright 1992, The Babcock & Wilcox Company, and to Steam/its generation and use, 41st Edition, Kitto and Stultz, Eds., Copyright 2005, The Babcock & Wilcox Company, the texts of which are hereby incorporated by reference as though fully set forth herein.

Herein, when a range such as 5-25 (or 5 to 25) is given, this means preferably at least or more than 5 and, separately and independently, preferably not more than or less than 25. In an example, such a range defines independently at least 5, and separately and independently, not more than 25.

Disclosed are energy-recovery processes and units for use with waste gas capture systems. Waste gas capture systems can include conventional equipment for removing waste gas, such as a reboiler or a stripping tower or regeneration column. Waste gases that can be removed include, but are not limited to, CO₂, H₂S, combinations thereof or the like. As a first step, removal of waste gas from a processing stream, such as flue gas, can include introduction of a solvent or solvent system to absorb the waste gas from the processing stream. Solvents or solvent systems can include any suitable solvent, and preferably a low-vapor pressure solvent or physical absorbents, especially those exhibiting selectivity for CO₂ and H₂S. Low vapor pressure solvents can include organics or inorganics, water, amines, glycol or combinations thereof.

Solvents having absorbed waste gas can be further treated to release the waste gas for further processing. The waste gas can be removed by heating the solvent to release the entrained waste gas, for example, in a reboiler. Heat energy, for instance in the form of steam, can be used to release the waste gas in the solvent or solvent system. To reduce the heat energy load on the waste gas capture system, energy recovered from processing the released waste gas can be integrated into the waste gas capture system.

Waste gas can be processed by a single or multi-stage compression. One or more compressors can be used, for example in series, to increase the pressure and reduce volume of waste gas, which in some instances can liquefy the waste gas. Compression of waste gas can increase the temperature of the gas wherein the heat energy incorporated into the waste gas by the compressors is generally lost to the environment. To remove residual solvent or moisture from the compressed waste gas, it can be cooled to condense the residual components. Cooling the compressed waste gas can increase the performance and efficiency of subsequent compression cycles. The compressed waste gas can be stored for further industrial usage.

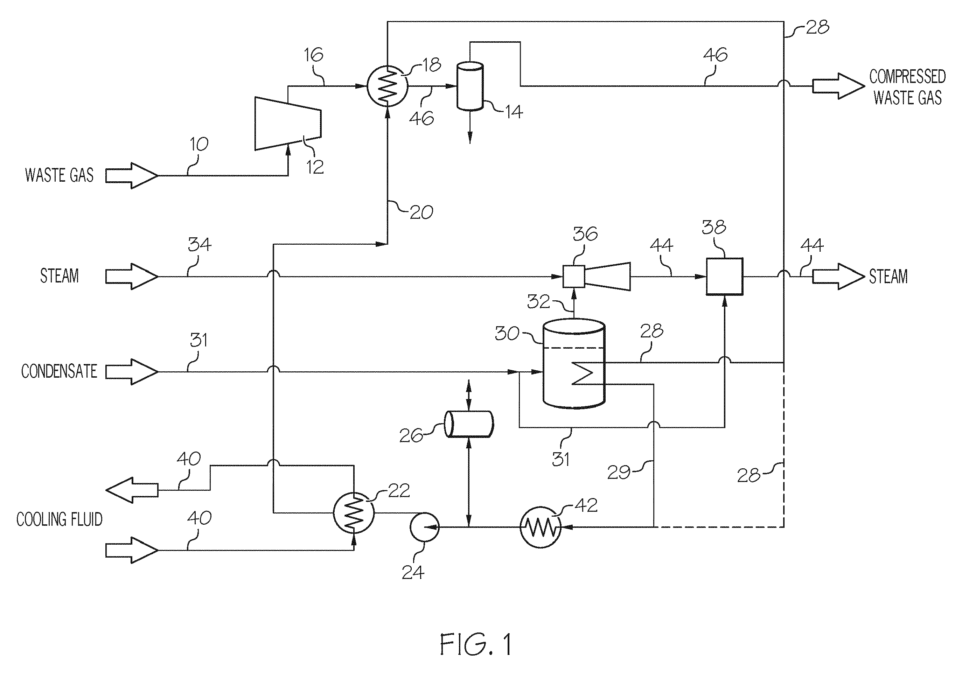

Turning to FIG. 1, it is shown a single-stage compression flow diagram for recovering heat energy from a waste gas capture system. As shown, waste gas 10 is fed to a waste gas compressor 12. The waste gas 10 can be generated from the capture system by equipment as known in the art, for example, from a stripping tower and reboiler. The waste gas compressor 12 increases the pressure and reduces the volume of the waste gas 10 to form waste gas compressor discharge 16. The compressor 12 also increases the temperature of the waste gas 10. A heat exchanger 18 positioned downstream of the compressor 12 can be used to reduce the temperature of the waste gas compressor discharge 16. The heat exchanger 18 can be any suitable heat exchanger as known in the art, for example, a shell and tube, plate and frame or the like. Preferably, the heat exchanger 18 is configured to achieve counter-current or near counter-current flow to optimize heat transfer. In such a configuration, the volume of heat transfer fluid can be reduced and higher temperature heat transfer fluid can be used. The compressed waste gas discharge 46 can optionally pass through a knock out drum 14 to remove any condensate formed after passing through heat exchanger 18.

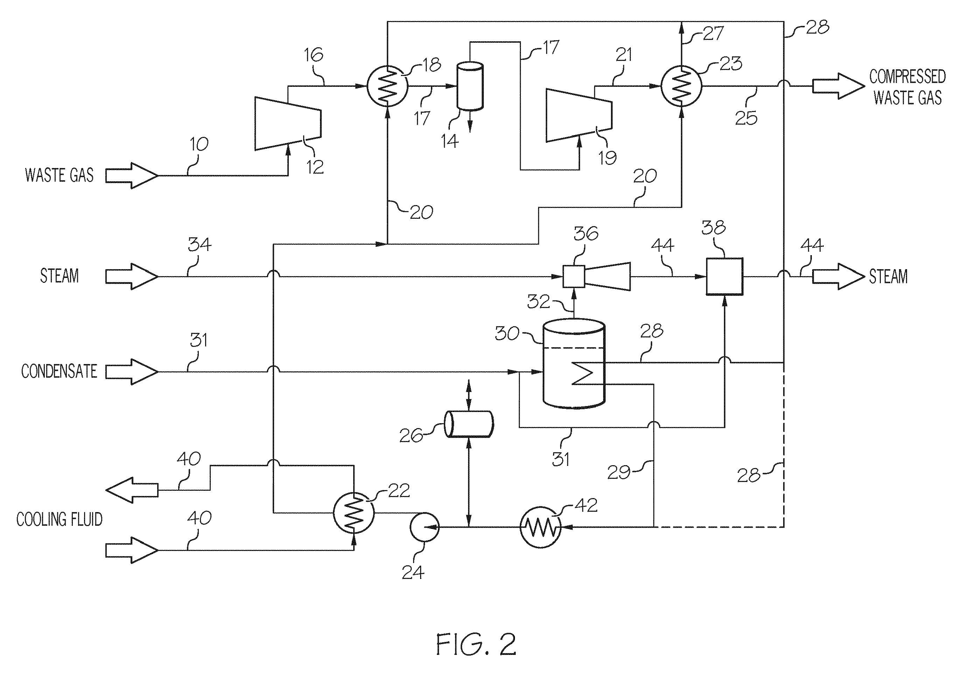

In one instance, the heat exchanger 18 can be referred to as an intercooler whereas, as shown in FIG. 2, the energy recovery system optionally can have a second waste gas compressor and a heat exchanger downstream of that compressor wherein the heat exchanger can be referred to as an aftercooler. Heat transfer fluid 20 can be fed through the heat exchanger 18 to reduce the temperature of the waste gas compressor discharge 16. The heat transfer fluid 20 can be any suitable fluid, for example, water or a water and glycol mixture.

The temperature of heat transfer fluid 20 is increased as it absorbs heat from the waste gas compressor discharge and it 28 exits the heat exchanger 18. The temperature of the hot heat transfer fluid 28 can be in the range of 35 to 425° C whereas the temperature of the heat transfer fluid 20 entering the heat exchanger can be in the range of 20 to 150° C. The hot heat transfer fluid 28 can be pumped to a steam generating apparatus 30. As shown the apparatus 30 can be a vessel, flash drum or tank. The steam generating apparatus can include a heat transfer surface, such as a heat coil or jacket, for heating liquid, such as water, contained inside the vessel 30 to generate steam or another vapor heat source. Liquid, preferably water, in the apparatus 30 can have a temperature in the range of 105 to 220° C. Low pressure steam can be generated having a pressure in the range of 0 to 0.275 MPa (gauge) or higher by the hot heat transfer fluid 28 releasing its heat energy across the heat transfer surface to boil or evaporate the liquid housed in the steam generating apparatus 30. The generated steam can be fed to the waste gas capture system for use as a recovered heat source. The heat transfer fluid 29 exiting the apparatus 30 can be as low as 110° C and can be pumped within the heat transfer system loop for reuse, such as to reduce the temperature of the waste gas compressor discharge. The heat transfer fluid 28 entering the apparatus can be in the range of 120° to 425° C.

In one embodiment, the steam generating apparatus 30 can contain steam condensate 31 from the waste gas capture system. The steam condensate 31 from the waste gas capture system can include condensate from the steam produced from the steam generating apparatus 30. For example, the steam condensate can be fed directly to the apparatus 30 from the reboiler in the capture system, which will directly relate to the condensate temperature to steam pressure being used in the reboiler. In an example, the reboiler can use 0.069 to 0.345 MPa (gauge) steam, which would equate to a condensate feed temperature to the apparatus 30 of 115° to 148° C.

The steam produced in the apparatus 30 can be a first steam source 32. The steam in the apparatus 30 can be drawn out or extracted for use as a heat source. The steam can optionally be mixed with a second steam source 34 to form a mixed steam source 44 for use as a heating fluid. The steam generated by the apparatus by use of the waste heat form the waste gas compressor can be used to condition and increase the mass flow rate of the steam being supplied to the waste gas capture system, such as in solvent regeneration and reducing the net steam requirements for the capture process.

A steam mixing device 36 can be used to draw the steam out of the apparatus 30. The steam mixing device 36 can be any suitable device, such as a steam ejector. In the case of a steam ejector, the second steam source 34 can be used as the motive fluid in the ejector to draw out the steam produced in the apparatus 30. The second steam source 34 can be at a higher pressure than the first steam source 32 prior to the sources 32, 34 being mixed, for example, above 0.275 MPa (gauge). For example, the second steam source 34 can be the steam supply, before or after a passing through a pressure reducing station in the case of high pressure steam, for the waste gas capture system, such as the steam used to fuel the reboiler. Another steam mixing device can be a compressor or vacuum pump (not shown).

The pressure of the mixed steam source can be controlled by selecting the pressure and amount of the first steam source and the second steam source. Preferably, the pressure and amount of each steam source 32, 34 is selected such that a mixed steam source 44 has a pressure suitable for use in the waste gas capture system or with other equipment in the plant needing a heat source, for example, above 0.275 MPa (gauge). The pressure of the steam generated in the apparatus 30 can further be selected to enhance the amount of steam being generated and thus utilizing the optimum amount of heat recovered from the waste compressor discharge. For instance, the pressure of the first steam source can be reduced to a pressure in the range of 0 to 0.275 MPa (gauge) to reduce the equilibrium temperature. Depending on the temperature and pressure of the mixed steam source, the steam may need to be de-superheated 38. The de-superheater 38 can use a cooling medium 31. The cooling medium can be any suitable fluid, for example, steam condensate produced by the waste gas capture system, such as by the reboiler. The de-superheater 38 is optional to condition the mixed steam source 44.

In addition to, or optionally in place of the steam generating apparatus 30, the hot heat transfer fluid 28 can be used as a heat source for the plant equipment or the waste gas capture system. For example, the hot heat transfer fluid 28 can heat the regenerating column reflux or lean gas from the absorber before it is introduced to the stack in the waste gas capture system. The hot heat transfer fluid can alternatively be used as an energy source for the reboiler or a thermal reclaimer. The thermal reclaimer may be used for regenerating the waste gas, solvent, or other volatiles, wherein the mixed steam source provides the energy to the thermal reclaimer to release the volatiles. The hot heat transfer fluid can further be used to heat the solvent in advance of being fed to the reboiler, tower or flash drums or heat the boiler feed water cycle.

In one embodiment, a device other than the steam generating apparatus using the hot heat transfer fluid is the heat exchanger 42 shown in FIG. 1 located downstream of the apparatus. Flowing counter current to the hot heat transfer fluid in the heat exchanger 42 can be any of the streams noted above in the waste gas capture system, for example, solvent, boiler feed water or the like. The hot heat transfer fluid 28 can bypass, entirely or in part, the steam generating apparatus 30 should it be desirable to use it as a non-steam generating heat source in the waste gas capture system. Alternatively, depending on heat transfer needs of the system, the hot heat transfer fluid 28 can be cycled between the apparatus 30 and the heat exchanger 42.

As shown, the heat transfer fluid 28, 29 can be in fluid communication with additional equipment for recovering and utilizing the heat energy generated by the waste gas compressor 12. For example, the heat transfer fluid can be contained in a closed loop heat exchange system (shown). Alternatively, the heat exchange system can be an open loop (not shown) wherein new fresh heat transfer fluid is used to recover heat energy as compared to regenerating heat transfer in a closed loop system. In a closed loop system, temperature of the heat transfer fluid may need to be balanced to achieve desired heat transfer. For instance, one or more trim coolers 22 can be used to adjust the heat transfer fluid temperature. The trim cooler 22 can use ambient air, plant cooling water or similar conventional media 40 to reduce or increase the temperature of the heat transfer fluid 20 as desired. Additional components of the heat exchange system can include a fluid circulation pump 24 to maintain flow rate, pressure and velocity of the heat transfer fluid as desired for effective recovery of heat energy from the compressor discharge streams. The fluid circulation pump 24 can be any suitable pump, such as a centrifugal, diaphragm or positive displacement pump. A fluid expansion tank 26 can be added to the heat exchange system to accommodate for volume variations as affected by the temperature and pressure of the heat transfer fluid.

Turning to FIG. 2, a multi-stage waste gas compression energy recovery process is shown. The diagram of FIG. 2 is similar to that of FIG. 1 except that an additional in-series compressor is used to treat the waste gas of the capture system.

The cooled waste gas compressor discharge 17 from a first compressor 12 can be fed to a second waste gas compressor 19 to further increase the pressure of the waste gas and reduce its volume for future use and storage. The pressure of the waste gas can be increased by the first waste gas compressor 12 and the pressure of the waste gas can be further increased from by the second waste gas compressor 21 up to 16 MPa (gauge). The second waste gas compressor 19, like the first compressor 12, can also increase the temperature of the waste gas 17. To recover the heat energy from the second compressor discharge 21, a second heat exchanger 23 can be located downstream of the compressor 19. The heat exchanger 23 can be any suitable heat exchanger as known in the art, for example, a shell and tube, plate and frame or the like. Preferably, the heat exchanger 23 is configured to achieve counter-current or near counter-current flow to optimize heat transfer. In such a configuration, the volume of heat transfer fluid can be reduced and higher temperature heat transfer fluid can be used. The compressed waste gas 25 can optionally pass through a knock out drum (not shown), such as 14, to remove any condensate formed after passing through heat exchanger 23.

Heat transfer fluid 20 can be fed through the heat exchanger 23 to reduce the temperature of the waste gas compressor discharge 21. The heat transfer fluid 20 can be any suitable fluid, for example, water or a water and glycol mixture. Preferably, the heat transfer fluid is the same type of fluid being fed to the first heat exchanger 18 such that the heat transfer fluid 20 flows through one heat exchange system loop as shown. The temperature of heat transfer fluid 20 is increased 27 as it exits the heat exchanger 23. The temperature of the hot heat transfer fluid 27 can be in the range of 35 to 425° C whereas the temperature of the heat transfer fluid 20 entering the heat exchanger can be in the range of 20 to 150° C. The hot heat transfer fluid 27 can be combined with the hot heat transfer fluid 28 exiting the first heat exchanger 18 and be pumped to a steam generating apparatus 30 as shown.

Therefore, from one perspective, there have now been described processes and units for recovering energy from a waste gas capture system. Heat energy generated from the compression of waste gas can be integrated with a waste gas capture system to reduce energy needs of the system. Recovered heat energy is used to produce useful energy sources such as low pressure steam that can be integrated back into the waste gas capture system. The recovered heat energy can be used to produce the waste gas, for instance in a regeneration column and reboiler. The produced waste gas can be fed into the compression units designed to transform the waste gas into a storage fluid.

Further example feature combinations consistent with the present teachings are set out in the following numbered clauses:
Clause 1. An energy-recovery process for a waste gas capture system, the process comprising: releasing waste gas from an absorption solvent; feeding the released waste gas to a waste gas compressor; introducing a heat transfer fluid to a heat exchanger downstream of a waste gas compressor to reduce the temperature of the waste gas compressor discharge, wherein the temperature of the heat transfer fluid exiting the heat exchanger is increased; and using the heat transfer fluid exiting the heat exchanger as a heat source for the waste gas capture system.
Clause 2. The process of clause 1, the waste gas comprising CO₂ or H2S.
Clause 3. The process of clause 1 or 2, the heat transfer fluid being in a closed loop heat exchange system.
Clause 4. The process of 1, 2 or 3, further comprising using the heat transfer fluid exiting the heat exchanger to generate a first steam source.
Clause 5. The process of clause 4, further comprising mixing the first steam source with a second steam source to form a mixed steam source and supplying the mixed steam source to the waste gas capture system to provide a recovered energy source.
Clause 6. The process of clause 5, the waste gas capture system having a reboiler for releasing the waste gas from the absorption solvent and the mixed steam source being used as a heat source for producing the waste gas in a regeneration column.
Clause 7. The process of clause 5 or 6, the waste gas capture system having a thermal reclaimer for regenerating the waste gas, solvent, or other volatiles, wherein the mixed steam source provides the energy to the thermal reclaimer to release the volatiles.
Clause 8. The process of clause 6 or 7, the produced waste gas being fed to the waste gas compressor.
Clause 9. The process of any of clauses 5 to 8, the waste gas capture system having a regeneration column, the mixed steam source being used as a heat source for increasing temperature a reflux stream of the regenerating column.
Clause 10. The process of any of clauses 5 to 9, the waste gas capture system comprising a waste gas absorption solvent, the mixed steam source being used to heat the waste gas absorption solvent prior to the waste gas absorption solvent being introduced to a regeneration column.
Clause 11. The process of any of clauses 5 to10, further comprising a steam ejector for mixing the first steam source with the second steam source, wherein the second steam source is at a pressure greater than the first steam source prior to mixing.
Clause 12. The process of any of clause s 5 to 11, further comprising a compressor for mixing the first steam source with the second steam source, wherein the second steam source is at a pressure greater than the first steam source prior to mixing.
Clause 13. An energy-recovery unit for a waste gas capture system, the unit comprising: a heat exchange loop containing a heat transfer fluid; a heat exchanger positioned downstream of a waste gas compressor such that the heat exchanger receives the waste gas compressor discharge and the heat transfer fluid flows through the heat exchanger to reduce the temperature of the waste gas compressor discharge; a steam generating apparatus for producing a first steam source, the steam generating apparatus having a heat exchange component for producing steam, the heat exchange component using the heat transfer fluid exiting the heat exchanger; a steam mixing device for combining the first steam source and a second steam source to form a mixed steam source, wherein the mixed steam source is supplied to the waste gas capture system to provide a recovered energy source.
Clause 14. The energy-recovery unit of clause 13, the waste gas compressor discharge comprising CO₂ or H2S.
Clause 15. The energy-recovery unit of clause 13 or 14, the steam mixing device being a steam ejector, wherein the second steam source is at a pressure greater than the first steam source prior to mixing.
Clause 16. The energy-recovery unit of clause 13, 14 or 15, the steam mixing device being a compressor for mixing the first steam source with the second steam source.
Clause 17. The energy-recovery unit of any of clauses 13 to 16, the steam generating apparatus being a vessel and the heat exchange component comprising a heat coil in the vessel, the heat coil housing the heat transfer fluid exiting the heat exchanger.
Clause 18. The energy-recovery unit of clause 17, the heat transfer fluid exiting the heat coil being used in the heat exchanger to reduce the temperature of the waste gas compressor discharge.
Clause 19. The energy-recovery unit of clause 17 or 18, the vessel containing steam condensate discharged from the waste gas capture system.
Clause 20. The energy-recovery unit of clause 19, the steam condensate comprising condensate generated from the mixed steam source being supplied to the waste gas capture system.
Clause 21. The energy-recovery unit of any of clause s 13 to 20, the waste gas capture system having a waste gas regeneration column for producing waste gas, wherein the waste gas is fed to the waste gas compressor and the mixed steam source is supplied to the waste gas regenerator for producing the waste gas.

All references, including but not limited to patents, patent applications, and non-patent literature are hereby incorporated by reference herein in their entirety.

While various aspects and embodiments have been disclosed herein, other aspects, embodiments, modifications and alterations will be apparent to those skilled in the art upon reading and understanding the preceding detailed description. The various aspects and embodiments disclosed herein are for purposes of illustration and are not intended to be limiting. It is intended that the present disclosure be construed as including all such aspects, embodiments, modifications and alterations insofar as they come within the scope of the appended claims or the equivalents thereof.

## Claims

1. An energy-recovery process for a waste gas capture system, the process comprising:
releasing waste gas from an absorption solvent;
feeding the released waste gas to a waste gas compressor;
introducing a heat transfer fluid to a heat exchanger downstream of a waste gas compressor to reduce the temperature of the waste gas compressor discharge, wherein the temperature of the heat transfer fluid exiting the heat exchanger is increased; and
using the heat transfer fluid exiting the heat exchanger as a heat source for the waste gas capture system.

2. The process of claim 1, the waste gas comprising CO₂ or H₂S.

3. The process of claim 1 or 2, the heat transfer fluid being in a closed loop heat exchange system.

4. The process of claim 1, 2 or 3, further comprising using the heat transfer fluid exiting the heat exchanger to generate a first steam source.

5. The process of claim 4, further comprising mixing the first steam source with a second steam source to form a mixed steam source and supplying the mixed steam source to the waste gas capture system to provide a recovered energy source.

6. The process of claim 5, the waste gas capture system having one or more selected from the group comprising: a reboiler for releasing the waste gas from the absorption solvent and the process further comprising using the mixed steam source as a heat source for producing the waste gas in a regeneration column; and a thermal reclaimer for regenerating the waste gas, solvent, or other volatiles, the process further comprising providing energy to the thermal reclaimer from the mixed steam source to release the volatiles.

7. The process of claim 6, the produced waste gas being fed to the waste gas compressor.

8. The process of any of claims 5 to 7, the waste gas capture system having one or more selected from the group comprising: a regeneration column, the process further comprising using the mixed steam source as a heat source for increasing temperature of a reflux stream of the regenerating column; and a waste gas absorption solvent, the process further comprising using the mixed steam source to heat the waste gas absorption solvent prior to the waste gas absorption solvent being introduced to a regeneration column.

9. The process of any of claims 5 to 8, wherein the second steam source is at a pressure greater than the first steam source prior to mixing, further comprising using one or more selected from the group comprising: a steam ejector; and a compressor, for mixing the first steam source with the second steam source.

10. An energy-recovery unit for a waste gas capture system, the unit comprising:
a heat exchange loop containing a heat transfer fluid;
a heat exchanger positioned downstream of a waste gas compressor such that the heat exchanger receives the waste gas compressor discharge and the heat transfer fluid flows through the heat exchanger to reduce the temperature of the waste gas compressor discharge;
a steam generating apparatus for producing a first steam source, the steam generating apparatus having a heat exchange component for producing steam, the heat exchange component using the heat transfer fluid exiting the heat exchanger;
a steam mixing device for combining the first steam source and a second steam source to form a mixed steam source, wherein the mixed steam source is supplied to the waste gas capture system to provide a recovered energy source.

11. The energy-recovery unit of claim 10, the steam mixing device being one or more selected from the group comprising: a steam ejector, wherein the second steam source is at a pressure greater than the first steam source prior to mixing; and a compressor for mixing the first steam source with the second steam source.

12. The energy-recovery unit of claim 10 or 11, the steam generating apparatus being a vessel and the heat exchange component comprising a heat coil in the vessel, the heat coil housing the heat transfer fluid exiting the heat exchanger.

13. The energy-recovery unit of claim 12, the heat transfer fluid exiting the heat coil being used in the heat exchanger to reduce the temperature of the waste gas compressor discharge.

14. The energy-recovery unit of claim 12 or 13, the vessel containing steam condensate discharged from the waste gas capture system, optionally wherein the steam condensate comprising condensate generated from the mixed steam source is supplied to the waste gas capture system.

15. The energy-recovery unit of any of claims 10 to 14, the waste gas capture system having a waste gas regeneration column for producing waste gas, wherein the waste gas is fed to the waste gas compressor and the mixed steam source is supplied to the waste gas regenerator for producing the waste gas.
